Europäisches Patentamt

European Patent Office

Office européen des brevets

(11) Veröffentlichungsnummer: **0 364 710**
**A2**

## (12) EUROPÄISCHE PATENTANMELDUNG

(21) Anmeldenummer: **89116230.7**

(22) Anmeldetag: **02.09.89**

(51) Int. Cl.5: **B60C 9/08 , B60C 15/00**

(30) Priorität: **21.10.88 DE 3835871**

(43) Veröffentlichungstag der Anmeldung:
**25.04.90 Patentblatt 90/17**

(84) Benannte Vertragsstaaten:
**AT BE CH DE ES FR GB GR IT LI LU NL SE**

(71) Anmelder: **Continental AG**
**Königsworther Platz 1 Postfach 1 69**
**D-3000 Hannover 1(DE)**

(72) Erfinder: **Boltze, Carsten**
**Buschweg 7**
**D-3015 Wennigsen(DE)**

(54) **Lenkpräziser Fahrzeugluftreifen.**

(57) Die Erfindung bezieht sich auf einen Fahrzeuglufteifen mit radialer, mehrlagiger Karkasse, von der
zumindest eine Karkaßlage die in beiden Reifenfüßen angeordneten Wulstkerne umschlingt und zumindest eine andere Karkaßlage die Wulstkerne
nicht umschlingt und an den Galgenschlingen einer
die Wulstkerne umschlingenden Karkaßlage befestigt
ist. Um eine erhöhte Lenkpräzision durch erhöhte
Karkaßlagenvorspannung zu erzielen, wird erfindungsgemäß vorgeschlagen, daß die Festigkeitsträger zumindest einer Karkaßlage, die die Wulstkerne
nicht umschlingt und an den Galgenschlingen einer
anderen, die Wulstkerne umschlingenden Karkaßlage
befestigt ist, aus einem stark wärmeschrumpfenden
Material bestehen und die Festigkeitsträger zumindest einer Karkaßlage, die die Wulstkerne umschlingt, aus einem Matrial bestehen, das seine Länge über der Temperatur im wesentlichen nicht ändert.

EP 0 364 710 A2

# Lenkpräziser Fahrzeugluftreifen

Die Erfindung bezieht sich auf einen Fahrzeugluftreifen mit radialer, mehrlagiger Karkasse, von der zumindest eine Karkaßlage die in beiden Reifenfüßen angeordneten Wulstkerne umschlingt und zumindest eine andere Karkaßlage die Wulstkerne nicht umschlingt und an den Galgenschlingen einer die Wulstkerne umschlingenden Karkaßlage befestigt ist. Ein solcher Fahrzeugluftreifen ist bekannt. Weiterhin ist in der US-PS 3,160,192 ein Fahrzeugluftreifen mit diagonaler, vierlagiger Karkasse beschrieben, bei dem die beiden inneren Lagen aus Nylon-Cord und die beiden äußeren Lagen aus Rayon-Cord gebildet sind.

Weiterhin ist es beim Aufbau eines Luftreifens bekannt, den Kernabstand auf der Aufbautrommel etwas kleiner zu wählen als die Bogenlänge der Karkasse im fertig vulkanisierten Reifen. Hierdurch erfahren die Karkaßfestigkeitsträger eine gewisse Zugvorspannung, der Seitenwandgummi eine gewisse Druckvorspannung. Die Festigkeitsträgervorspannung dient dazu, im Funktionsverlauf der Seitenführungskraft über dem Driftwinkel die Steigung in der Umgebung des Driftwinkels Null zu erhöhen. Hierdurch wird eine verbesserte Lenkpräzision im Geradeauslauf erreicht. Allerdings bleibt eine noch höhere Vorspannung wünschenswert, um eine noch stärkere Steigung der . Seitenführungskraft über dem Driftwinkel zu erzielen. Dies gilt insbesondere für solche Reifen, die dafür ausgebildet sind, in eine Felge mit radial nach innen weisenden Felgenhörnern montiert zu werden. Bei diesen neuartigen Reifen weisen nämlich die Seitenwände in ihrem Querschnitt eine größere Bogenlänge auf und sind deshalb weicher. Die Vorspannung der Festigkeitsträger kann nicht durch eine weitere Verkürzung des Kernabstandes auf der Aufbautrommel erzielt werden, da dann die Karkaßfäden der inneren Lage teilweise aus dem Reifen in Richtung der Luftkammer heraustreten könnten. Die Haftung zwischen Festigkeitsträger und Gummi reagiert aber schon auf kleinste Freilegungen äußerst empfindlich.

Aufgabe der Erfindung ist es, einen Fahrzeugluftreifen zu schaffen, dessen Karkaßfestigkeitsträger stärker vorgespannt sind, ohne daß diese zur Luftkammer hin austreten können.

Die Aufgabe wird erfindungsgemäß dadurch gelöst, daß die Festigkeitsträger zumindest einer Karkaßlage, die die Wultkerne nicht umschlingt und an den Galgenschlingen einer anderen, die Wulstkerne umschlingenden Karkaßlage befestigt ist, aus einem stark wärmeschrumpfenden Material bestehen und die Festigkeitsträger zumindest einer Karkaßlage, die die Wulstkerne umschlingt, aus einem Material bestehen, dessen Länge im wesentlichen temperaturunabhängig ist. Das Entscheidende des Erfindungsgedankens ist, daß sich die erhöhte Vorspannung der Karkaßfäden erst allmählich nach Beginn der Vulkanisation einstellt; die erhöhte Vorspannung tritt also erst zu einem Zeitpunkt ein, wo die innersten Gummischichten bereits einen hohen Vernetzungsgrad erreicht haben und dadurch das Austreten der Festigkeitsträger in Richtung Luftkammer unterbinden. Die bislang bekannte Straffung durch einen kleineren Abstand von Wulst zu Wulst auf der Aufbautrommel führt hingegen zur vollen Festigkeitsträgerspannung von Beginn an der Vulkanisation. Zu Beginn der Vulkanisation sind die Gummischichten - auch die inneren - aber noch verhältnismäßig fließwillig.

Damit der Reifen eine befriedigende Dimensionsstabilität hat, verfügt er über mindestens eine Lage, deren Festigkeitsträger über der Temperatur im wesentlichen ihre Länge nicht ändern. Vorteilhafterweise wird zu diesem Zwecke Rayon eingesetzt. Die nicht schrumpfende Lage dient auch der Vermeidung von Beulen durch ungleichmäßigen Kautschukfluß in der Vulkanisationsform, insbesondere bei der sogenannten Resterhebung

Vorzugsweise umschlingt die innerste Karkaßlage die Wulstkerne, und ihre Festigkeitsträger bestehen aus einem Material, das seine Länge über der Temperatur im wesentlichen nicht ändert. Der optimale Effekt tritt ein, wenn die äußerste Karkaßlage die Wulstkerne nicht umschlingt und deren Festigkeitsträger aus einem stark wärmeschrumpfenden Material bestehen. Dabei empfehlen sich als stark wärmeschrumpfendes Material die Polyamide. Die Fahrzeugluftreifen für schnelle PKW verfügen vorteilhafterweise nur über zwei Karkaßlagen.

Durch den Wärmeschrumpf einer äußeren Lage wird nicht nur diese äußere Lage selbst gestrafft, sondern auch die Galgenschlinge der inneren Lage, an der die äußere Lage befestigt ist. Dadurch wird der am Stand der Technik bislang zu beklagende Straffheitsabfall innerer Lagen, der durch die Stauchung der nach außen weisenden Galgenschlinge beim Bombieren und der damit einhergehenden Lockerung zu erklären ist, verhindert. Eine verbesserte Lagenstraffung wäre zwar auch erreichbar, wenn eine innere Karkaßlage die Wulstkerne umschlänge und deren Festigkeitsträger aus einem stark wärmeschrumpfenden Material bestünden und die Festigkeitsträger einer äußeren Karkaßlage, die die Wulstkerne nicht umschlänge, aus einem Material bestünden, dessen Länge im wesentlichen temperaturunabhängig wäre. Dies würde jedoch in wesentlich höherem Maße dazu führen, daß die umgebuckte Karkaßlage unter den Wulstkernen herumgezogen würde, während dieser unerwünschte Effekt bei der bevorzugten Lösung auf ein Minimum beschränkt ist.

Die Erfindung wird nachfolgend anhand einer Figur näher erläutert. Sie zeigt im Querschnitt einen Fahrzeugluftreifen 1 montiert auf einer Hochbettfelge 2, deren Felgenhörner 8 nach radial innen weisen. Dadurch, daß die Verbindungsstelle Reifen-Felge vor direkter Belastung im luftdrucklosen Pannenlauf geschützt ist, wird eine hervorragende Pannenlauffähigkeit erzielt. Bei vergleichbaren Querschnittsverhältnissen weisen die Seitenwände 9 solcher Reifen eine größere Bogenlänge auf als konventionelle Reifen.

Der Fahrzeugluftreifen 1 weist eine innere Karkaßlage 3 auf, die mittels je einer Galgenschlinge 4 an den Wulstkernen 5 verankert ist. Der Reifen 1 weist außerdem eine äußere Karkaßlage 6 auf, die hier gestrichelt dargestellt ist. Die äußere Karkaßlage 6 ist mit ihren Enden 7 an den Galgenschlingen 4 der inneren Karkaßlage 3 befestigt, ist also nur mittelbar gegenüber den Wulstkernen 5 festgelegt. Die Festigkeitsträger der äußeren Karkaßlage 6 bestehen aus Polyamid, einem Material mit hohem Wärmeschrumpf. Die Festigkeitsträger der inneren Karkaßlage 3 bestehen hingegen aus Rayon, einem Material mit geringem Wärmeschrumpf. Während der Vulkanisation strafft die äußere Karkaßlage 6 infolge ihres Wärmeschrumpfes sich selbst und die Galgenschlinge der inneren Karkaßlage 3 und verhindert dadurch einen Spannungsabfall der inneren Karkaßlage 3.

Während die Erfindung an Fahrzeugluftreifen, die dafür ausgebildet sind, in eine Felge mit radial nach innen weisenden Felgenhörnern montiert zu werden, besonders gut zur Geltung kommt, kann mit ihr auch die Lenkpräzision an konventionellen Reifen weiter erhöht werden.

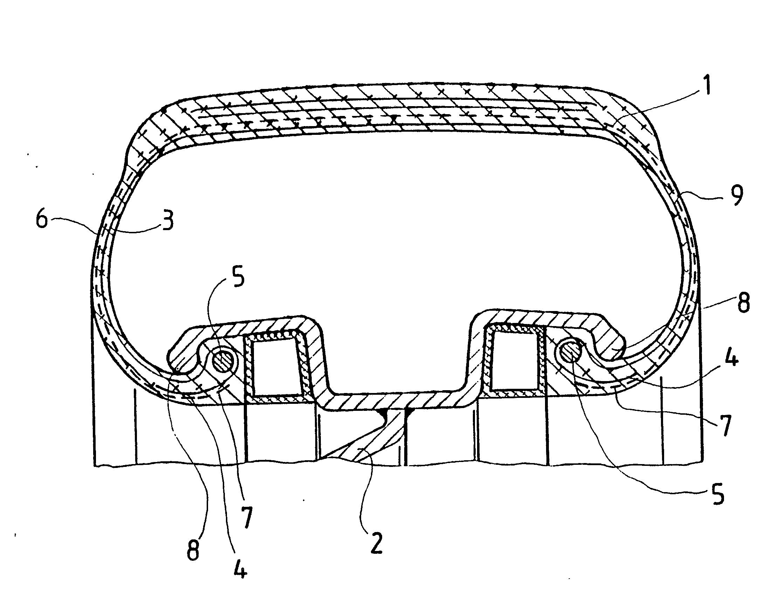

## Ansprüche

1. Fahrzeugluftreifen (1) mit radialer, mehrlagiger Karkasse, von der zumindest eine Karkaßlage (3) die an beiden Reifenfüßen angeordneten Wulstkerne (5) umschlingt und zumindest eine andere Karkaßlage (6) die Wulstkerne (5) nicht umschlingt und an den Galgenschlingen (4) einer die Wulstkerne (5) umschlingenden Karkaßlage (3) befestigt ist, **dadurch gekennzeichnet,** daß die Festigkeitsträger zumindest einer Karkaßlage (6), die die Wulstkerne (5) nicht umschlingt und an den Galgenschlingen (4) einer anderen, die Wulstkerne (5) umschlingenden Karkaßlage (3) befestigt ist, aus einem stark wärmeschrumpfenden Material bestehen und die Festigkeitsträger zumindest einer Karkaßlage (3), die die Wulstkerne (5) umschlingt, aus einem Material bestehen, dessen Länge im wesentlichen temperaturunabhängig ist.

2. Fahrzeugluftreifen (1) nach dem Oberbegriff des Anspruches 1, wobei der Fahrzeugluftreifen (1) dafür ausgebildet ist, in eine Felge (2) mit radial nach innen weisenden Felgenhörnern (8) montiert zu werden, **dadurch gekennzeichnet,** daß die Festigkeitsträger zumindest einer Karkaßlage (6), die die Wulstkerne (5) nicht umschlingt und an den Galgenschlingen (4) einer anderen, die Wulstkerne (5) umschlingenden Karkaßlage (3) befestigt ist, aus einem stark wärmeschrumpfenden Material bestehen und die Festigkeitsträger zumindest einer Karkaßlage (3), die die Wulstkerne (5) umschlingt, aus einem Material bestehen, dessen Länge im wesentlichen temperaturunabhängig ist.

3. Fahrzeugluftreifen nach Anspruch 1 oder Anspruch 2, dadurch gekennzeichnet, daß die innerste (3) der Karkaßlagen (3,6) die Wulstkerne (5) umschlingt und, daß deren (3) Festigkeitsträger aus einem Material bestehen, dessen Länge im wesentlichen temperaturunabhängig ist.

4. Fahrzeugluftreifen nach Anspruch 1 oder Anspruch 2, dadurch gekennzeichnet, daß die äußerste (6) der Karkaßlagen (3,6) die Wulstkerne (5) nicht umschlingt und, daß deren (6) Festigkeitsträger aus einem stark wärmeschrumpfenden Material bestehen.

5. Fahrzeugluftreifen nach Anspruch 1 oder Anspruch 2, dadurch gekennzeichnet, daß das Material für die wärmeschrumpfenden Festigkeitsträger im wesentlichen Polyamide sind.

6. Fahrzeugluftreifen (1) nach Anspruch 1 oder Anspruch 2, dadurch gekennzeichnet, daß das Material für die sich in ihrer Länge über der Temperatur kaum verändernden Festigkeitsträger im wesentlichen Rayon ist.

7. Fahrzeugluftreifen (1) nach Anspruch 1 oder Anspruch 2, dadurch gekennzeichnet, daß er (1) über zwei Karkaßlagen verfügt.